# EUROPÄISCHE PATENTANMELDUNG

(11) **EP 0 701 104 A2**
(43) Veröffentlichungstag der Anmeldung: **13.03.1996**
(21) Anmeldenummer: 95112652.3
(22) Anmeldetag: 11.08.1995
(51) Int. Cl.: G01B 11/24

(54) **Lichtschnitt-Triangulations-Verfahren und Vorrichtung zur on-line-Vermessung von bewegten Profilen**

(30) Priorität: 08.09.1994 DE 4431922
(71) Anmelder: Fried. Krupp AG Hoesch-Krupp, D-45143 Essen (DE)
(72) Erfinder: Hangmann, Norbert, Dipl.-Phys., D-46049 Oberhausen (DE); Kienemund, Albrecht, Dr. Rer. Nat., D-46119 Oberhausen (DE)

(57) **Zusammenfassung**

Die Erfindung betrifft ein Lichtschnitt-Triangulations-Verfahren und eine Vorrichtung zur on-line-Vermessung von bewegten Profilen, bei denen Laserlicht auf ein Profil gelenkt und die aus dem Lichtschnitt reflektierte Strahlung mittels einer unter einem Winkel zur Einstrahlungsrichtung angeordneten CCD-Kamera aufgenommen wird.

Zur Erhöhung der Meßgenauigkeit wird bevorgeschlagen, daß der Lichtschnitt in mehrere auf einer Linie liengende Punkte aufgeteilt ist, die nacheinander zum Zweck jeweiliger Reflektionsmessungen von einem fokussierten und unter verschiedenen Winkeln abgelenkten Laserstrahl abgetastet werden. Zur Ablenkung des Laserstrahles dient ein schwenkbarer Spiegel.

## Beschreibung

Die Erfindung betrifft ein Lichtschnitt-Triangulations-Verfahren zur on-line-Vermessung von bewegten Profilen, bei denen Laserlicht auf ein Profil gelenkt und die aus dem Lichtschnitt reflektierte Strahlung mittels einer unter einem Winkel von vorzugsweise 45° zur Einstrahlungsrichtung angeordneten CCD-Kamera aufgenommen wird.

Die Erfindung betrifft ferner eine Vorrichtung zur Durchführung dieses Verfahrens mit einem Lichtschnitt-Triangulations-Aufbau, bei dem ein über eine Scanner-Linse erzeugtes Laserstrahlenbündel mittels einer CCD-Kamera aufgenommen wird.

Das eingangs genannte Verfahren gehört zu den sogenannten berührungslosen Meßverfahren; es wird beispielsweise in der Gummi- und Reifenindustrie manuellen Probenentnahmen und sonstigen Testverfahren vorgezogen, weil es in automatischen Herstellungs- oder Verarbeitungsprozessen bei hohen Vorschubgeschwindigkeiten der Profile einsetzbar ist. Das Lichtschnitt-Triangulations-Verfahren beruht darauf, daß aus der Position des in die Kamera (oder sonstigen Sensor) reflektierten Anteiles des Laserlichtes der Abstand zwischen der Kamera (bzw. dem Sonsor) und dem Objekt an der Schnittlinie des Laserlichtstrahlenbündels und des Objektes nach einfacher Triangulationsrechnung ermittelt werden kann.

Bei den nach dem Stand der Technik bisher bekannten Verfahren wird das von einer Laserquelle ausgesandte Licht durch eine geeignete Optik derart dispergiert, daß das Laserstrahlenbündel auf dem Objekt, wie z.B. dem Profil, linienförmig abgebildet und reflektiert wird. Um die Profilmessung über die gesamte Breite des Profilstreifens durchführen zu können, besitzt das Laserstrahlenbündel eine entsprechende (Spur-)Breite. Dieses Verfahren hat den Nachteil einer geringen Auflösungsgenauigkeit, deren Grenzen durch die relative Bewegung des zu vermessenden Profiles während der Belichtungszeit bestimmt sind. Die Relativbewegung kann sowohl durch die Vorschubgeschwindigkeit des zu vermessenden Objektes als auch durch Querbewegungen dieses Objektes zusammengesetzt sein, die durch mangelnde Führung, insbesondere bei weichen Materialien auftreten können.

Es ist daher Aufgabe der vorliegenden Erfindung, das eingangs genannte Lichtschnitt-Triangulations-Verfahren und die hierzu benötigte Vorrichtung hinsichtlich der Meßgenauigkeit, nämlich der Auflösung, zu verbessern.

Dieser Aufgabe wird durch das Verfahren nach Anspruch 1 gelöst, das dadurch gekennzeichnet ist, daß der Lichtschnitt in mehrere auf einer Linie liegende Punkte aufgeteilt ist, die nacheinander zum Zweck jeweiliger Reflektionsmessungen von einem fokussierten und unter verschiedenen Winkeln abgelenkten Lichtstrahl abgetastet werden. Dieses Verfahren hat folgende Vorteile.

Dadurch, daß der Lichtstrahl punkt- bzw. spotförmig, also auf einer kleineren Fläche des Objektes (Profiles) als bisher abgebildet wird, ergibt sich am Objektort sowie bei den von dort reflektierten Strahlen eine entsprechend höhere Lichtintensität, die zu einer Verkürzung der Belichtungszeit führt, die für die Abbildung dieses Punktes (Spots) erforderlich ist. Hierdurch ergibt sich eine größere Schärfe des abgebildeten Objektes, da während der kürzeren Belichtungszeit durch Relativbewegungen des Objektes hervorgerufene Bewegungsunschärfen in entsprechendem Maße minimiert werden. Das gesamte Profil wird zusammengesetzt aus mehreren jeweils schärfer abgebildeten Bildpunkten, die in einer Aneinanderreihung eine Spur ergeben, die (im wesentlichen) quer zur Vorschubrichtung des zu vermessenden Profiles liegt.

Weitere Ausgestaltungen des erfindungsgemäßen Verfahrens sind in den Unteransprüchen 2 bis 15 beschrieben.

So wird vorzugsweise der Brennpunkt eines Laserstrahles mit konstantem Fokusdurchmesser und konstanter Geschwindigkeit quer zur Vorschubrichtung des Profiles über das Profil abgelenkt und die gesamte Spur des Laserstrahles auf dem Profil auf eine einzige CCD-Kamera abgebildet, die in einem Winkel zur Einfallsebene des Laserstrahles derart angeordnet ist, daß zu jedem Zeitpunkt dem momentanen Aufpunkt des Laserstrahles auf den Profil ein entsprechender Bildpunkt auf dem CCD-Kamerabild entspricht, wobei die von den einzelnen Bildpunkten erzeugten Bilder vorzugsweise gespeichert bleiben und weiterhin vorzugsweise erst zu einem späteren Zeitpunkt ausgelesen werden. Der Punkt- oder Fokusdurchmesser des Laserstrahles im Auftreffpunkt auf dem Meßobjekt, dem Profil, beträgt 60 µm ± 10 µm. Das Verhältnis der Linienlänge (des Lichtschnittes) oder, anders ausgedrückt, der Spurlänge des abgelenkten Laserstrahles zum Fokusdurchmesser ist vorzugsweise größer als 5000.

Nach einer weiteren Ausgestaltung der Erfindung ist die Lichtschnittlinie, die sich aus den aneinandergereihten einzelnen Abbildungspunkten ergibt, mindestens 500 mm breit. Da eine mechanische Führung des Lasers quer zur Vorschubrichtung des zu vermessenden Profiles ebenso aufwendig wie bezogen auf die geforderte Meßgenauigkeit inexakt ist, wird der Laserstrahl vorzugsweise durch einen schwenkbaren Spiegel abgelenkt. Der Spiegel verharrt so lange in einer momentanen Schwenkposition wie dies zur Ausleuchtung und Belichtung des Objektpunktes erforderlich ist. Anschließend wird der Spiegel (oder ein entsprechendes optisches System) so weiter bewegt, daß der nächste, auf der Spur liegende Objektpunkt angestrahlt wird. Bevorzugt wird der Laserstrahl durch eine Scanner-Linse fokussiert, die prinzipiell nach dem Stand der Technik bekannt ist.

Es hat sich als vorteilhaft erwiesen, den Laserstrahl mit einer Abtastgeschwindigkeit entlang der Lichtschnittlinie zu bewegen, die ≦ 25 m/s liegt, um auch bei Objekten mit geringer Reflektivität einwandfreie Meßergebnisse zu erzielen, wobei bereits die Geschwindigkeit von 25 m/s für Objekte aus Kautschuk geeignet ist.

Nach einer Weiterbildung der Erfindung ist die Abtastgeschwindigkeit, mit der der Laserstrahl entlang der Lichtschnittlinie bewegt wird, mindestens 30mal größer, vorzugsweise 50mal größer als die Profilvorschubgeschwindigkeit. Setzt man eine Laserabtastgeschwindigkeit von 25 m/s voraus, bedeutet dies, daß bei einer 50mal größeren Profilvorschubgeschwindigkeit das Profil mit einer Geschwindigkeit von 30 m/min (0,5 m/s) vorwärts bewegt wird.

Nach einer weiteren Ausgestaltung der Erfindung wird die Auswertung nach dem sogenannten Time- and Delay-Integrationsverfahren durchgeführt, wonach jede auf oder in der Kamera abgebildete Spur als Zeile kontinuierlich oder diskontinuierlich ausgelesen wird, so daß während des Lesevorganges einer Spur bereits eine zweite und/oder dritte Spur abgebildet und/oder gespeichert werden kann. Durch diese Maßnahme wird eine ebenso variable wie schnelle Meßwertverarbeitung gewährleistet.

Nach einer weiteren Ausgestaltung der Erfindung wird der Laserstrahl so hell-dunkel getastet, daß ein Lichtgitter entsteht. Dieses Lichtgitter kann zur Erhöhung der Meßgenauigkeit mittels eines Subpixel-Algorithmus vermessen werden, vorzugsweise mit einer Auflösung in horizontaler Richtung von 0,25 mm und in dazu senkrechter Richtung von 0,1 mm.

Das Verhältnis Breite/Höhe des angestrahlten Objektfeldes auf dem bewegten Profil wird dem Breite/Höhe-Verhältnis der CCD-Matrix-Kamera angepaßt. Bevorzugt wird ein Breite/Höhe-Verhältnis des Objektfeldes größer 10 : 1 bei Verwendung einer CCD-Kamera mit 2048 x 96 Bildpunkten.

Die Aufgabe wird ferner durch die im Anspruch 16 beschriebene Vorrichtung gelöst, die erfindungsgemäß dadurch gekennzeichnet ist, daß das Laserstrahlenbündel über einen schwenkbaren Spiegel auf die Scanner-Linse so lenkbar ist, daß die sukzessive erzeugten Laserlichtpunkte auf einer quer zum Profil verlaufenden Lichtschnittlinie (Laserspur) liegen.

Weiterbildungen der Vorrichtung sind in den Ansprüchen 17 bis 19 beschrieben, deren Vorteile sich, wie oben erwähnt, in entsprechender Weise ergeben.

Ein Ausführungsbeispiel der Erfindung ist in den Zeichnungen dargestellt. Es zeigen
- Fig. 1 und 2: schematische Ansichten der erfindungsgemäßen Meßanordnung,
- Fig. 3, 4: jeweils einen gemessenen Profilverlauf quer zum Profil.

Das Prinzip der Triangulation ist grundsätzlich bekannt. Hierbei wird Licht einer Lichtquelle auf ein Meßobjekt ausgesandt, das von einer in einem Winkel zur Einfallsebene des ausgesandten Lichtstrahlenbündels angeordneten Kamera (oder sonstigem Target) beobachtet wird. Bestehende Profilhöhenunterschiede werden an unterschiedlichen Orten der Kamera abgebildet, wobei sich unter Berücksichtigung des Betrachtungswinkels und des Abbildungsmaßstabes das Höhenprofil ermitteln läßt.

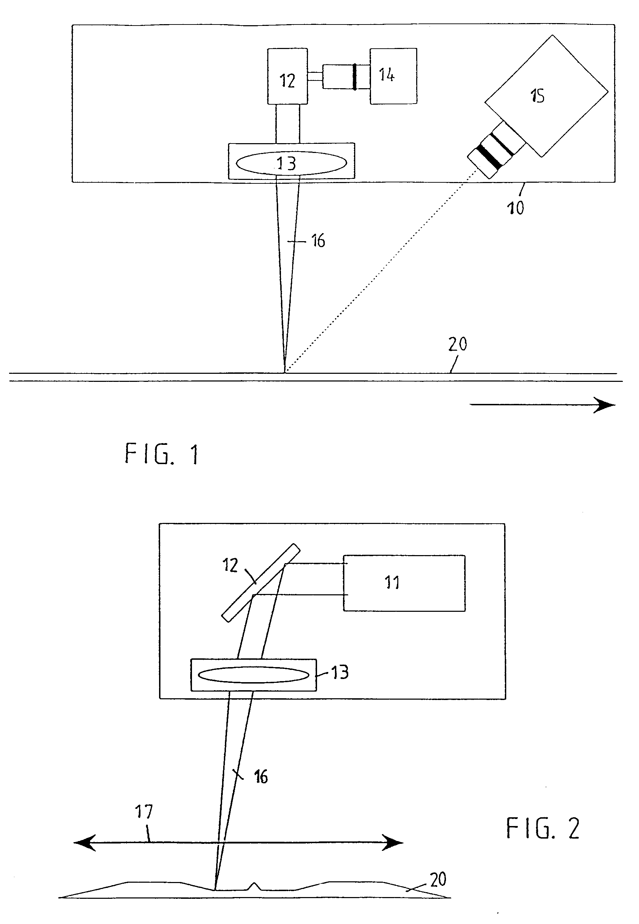

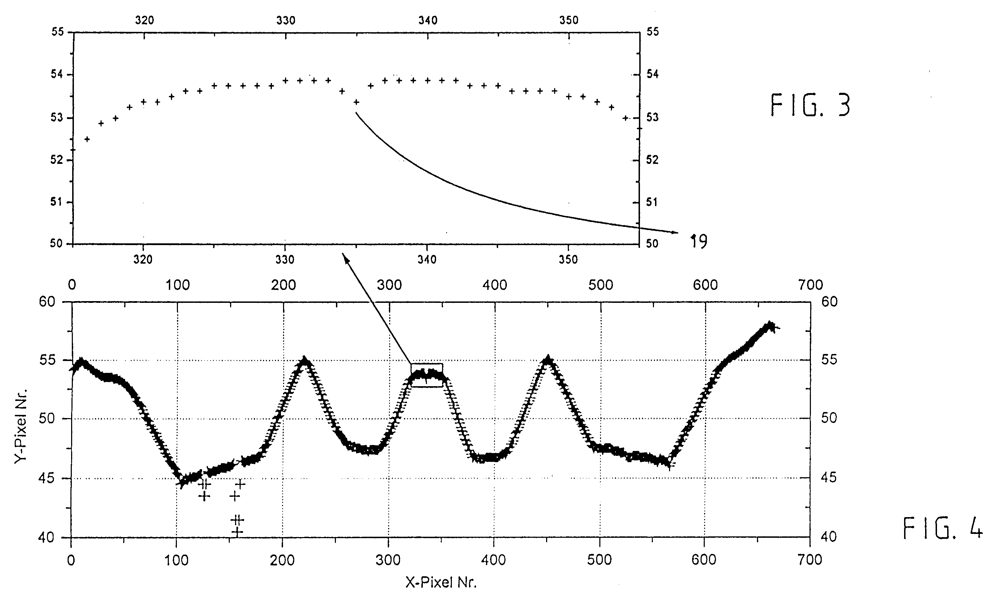

Bei der in Fig. 1 und 2 dargestellten Anordnung ist in einem gemeinsamen Gehäuse 10 ein Laser 11 angeordnet, dessen ausgesandtes Licht über einen schwenkbaren Spiegel 12 und eine Scanner-Linse 13 auf ein zu vermessendes Profil 20 abgebildet wird. Zur jeweiligen Drehwinkeleinstellung des Umlenkspiegels 12 dient ein Scanner 14. Das an dem Profil 20 reflektierte Licht wird mittels einer CCD-Kamera 15 aufgenommen. Je nach Drehwinkel des Scanner-Spiegels kann das Laserstrahlenbündel 16 den durch den Doppelpfeil überstrichenen Bereich 17 abtasten. Wie aus Fig. 2 ersichtlich, kann hierbei das Profil (das ist das Profil quer zur Transportrichtung 18) ermittelt werden. Betreffende Konturverläufe sind in Fig. 4 - und in vergrößerter Teilbereichs-Darstellung in Fig. 3 - zu entnehmen, in der insbesondere eine Referenzmarke 19 besonders gekennzeichnet ist, um eine örtliche Zuordnung treffen zu können.

In einem konkreten Anwendungsfall wird ein kollimierter Strahl einer Laserdiode über einen drehbaren Ablenkspiegel 12, der von einem Galvanometer-Scanner 14 angetrieben wird, auf eine Scanner-Optik 13 abgelenkt. Diese fokussiert den Laserstrahl 16 auf den Laufstreifen 20, wobei die gewählte spezielle Optik für eine konstante Laserspot-Geschwindigkeit über den gesamten Ablenkbereich, der größer als 500 mm sein kann, sorgt. Nahezu unabhängig vom Ablenkwinkel bleibt der gewählte Spotdurchmesser von 50 µm über den gesamten Ablenkbereich unverändert. Aufgrund des Breite/Höhe-Verhältnisses des Objektfeldes von 500 durch 25 (20 : 1) wird eine CCD-Kamera mit 2048 x 96 Bildpunkten eingesetzt, auf die die Lichtschnittfigur abgebildet wird. Hierdurch kann eine komplette Lichtschnittfigur auf ein einziges CCD-Chip abgebildet werden, so daß aufgrund der Anpassung des Kamera-Bildfeldes die auszuwertende Datenmenge auf ein Minimalmaß begrenzt ist. Die Belichtungszeit für die Aufnahme einer Lichtschnittfigur, d.h., einer Spur 17, beträgt 20 ms bei einer Abtastbreite von 500 mm.

Die vorliegende Erfindung kann auch dergestalt angewendet werden, daß bei einem Laufstreifen sowohl die Ober- als auch Unterseite vermessen werden, wozu zwei Meßanordnungen gemäß Fig. 1 und 2 verwendet werden, die in spiegelsymmetrischem Aufbau zum Laufstreifen oberhalb und unterhalb dieses Laufstreifens 14 angeordnet sind. Durch punktweise Abstandsmessung mit zwei Triangulations-Vorrichtungen kann dann die Profildicke aus der Differenz der beiden Abstandswerte zusätzlich zu dem Profilverlauf ermittelt werden.

Mit dem beschriebenen System kann eine Auflösung in vertikaler Richtung von zunächst 460 µm erreicht werden. Wird der auf den Laufstreifen geschrieben Spot nicht auf ein Pixel abgebildet, sondern über mehrere Pixel "verwaschen", kann mit Hilfe eines Subpixel-Algorithmus die Meßgenauigkeit auf 0,1 mm gesteigert werden. Die Auflösung in horizontaler Richtung beträgt 0,25 mm. Eine weitere Steigerung der geometrischen Auflösung des Profilmeßsystemes kann erreicht werden, wenn das Kamera-Bildfeld verkleinert wird, d.h., der Kameraabstand reduziert wird. Hierbei ist es allerdings notwendig, daß eine vertikale Nachführung der Kamera erforderlich wird.

Die besonderen Vorteile der beschriebenen Vorrichtung und des beschriebenen Verfahrens liegen darin, daß pro Meßvorrichtung jeweils nur ein optisches Element, nämlich der Spiegel 12, bewegt werden muß. Das Laufstreifenprofil läßt sich mit nur einer einzigen Aufnahme komplett darstellen, wobei die Lichtschnittebene räumlich eindeutig definiert ist bzw. zugeordnet werden kann. Die Schwenkbarkeit des Spiegels 12 ermöglicht eine variable Einstellung der Spurbreite oder die Auswertung eines Profil-Teilbereiches.

## Patentansprüche

1. Lichtschnitt-Triangnlations-Verfahren zur on-line-Vermessung von bewegten Profilen, bei denen Laserlicht auf ein Profil gelenkt und die aus dem Lichtschnitt reflektierte Strahlung mittels einer unter einem Winkel von vorzugsweise 45° zur Einfallsrichtung angeordneten CCD-Kamera aufgenommen wird,
**dadurch gekennzeichnet**,
daß der Lichtschnitt in mehrere auf einer Linie liegende Punkte aufgeteilt ist, die nacheinander zum Zweck jeweiliger Reflektionsmessungen von einem fokussierten und unter verschiedenen Winkeln abgelenkten Laserstrahl abgetastet werden.

2. Verfahren nach Anspruch 1, dadurch gekennzeichnet, daß der Brennpunkt eines Laserstrahles mit konstantem Fokusdurchmesser und konstanter Geschwindigkeit quer zur Vorschubrichtung des Profiles über das Profil abgelenkt wird und die gesamte Spur des Laserstrahles auf dem Profil auf eine einzige CCD-Kamera abgebildet wird, die in einem Winkel zur Einfallsebene des Laserstrahles derart angeordnet ist, daß zu jedem Zeitpunkt dem momentanen Aufpunkt des Laserstrahles auf dem Profil ein entsprechender Bildpunkt dem CCD-Kamerabild entspricht, wobei die von den einzelnen Bildpunkten erzeugten Bilder vorzugsweise gespeichert bleiben und weiterhin vorzugsweise erst zu einem späteren Zeitpunkt ausgelesen werden.

3. Verfahren nach Anspruch 1 oder 2, dadurch gekennzeichnet, daß der Punkt- oder Fokusdurchmesser 60 µm ± 10 µm beträgt.

4. Verfahren nach einem der Ansprüche 1 bis 3, dadurch gekennzeichnet, daß das Verhältnis von Linien- oder Spur-Länge des abgelenkten Laserstrahles zum Fokusdurchmesser größer als 5000 ist.

5. Verfahren nach einem der Ansprüche 1 bis 4, dadurch gekennzeichnet, daß die Lichtschnittebene oder -spur mindestens 500 mm breit ist.

6. Verfahren nach einem der Ansprüche 1 bis 5, dadurch gekennzeichnet, daß der Laserstrahl durch einen schwenkbaren Spiegel abgelenkt wird.

7. Verfahren nach einem der Ansprüche 1 bis 6, dadurch gekennzeichnet, daß der Laserstrahl durch eine Scanner-Linse fokussiert wird.

8. Verfahren nach einem der Ansprüche 1 bis 7, dadurch gekennzeichnet, daß die Abtastgeschwindigkeit, mit der der Laserstrahl entlang der Lichtschnittlinie bewegt wird, ≦ 25 m/s beträgt.

9. Verfahren nach einem der Ansprüche 1 bis 8, dadurch gekennzeichnet, daß die Abtastgeschwindigkeit, mit der der Laserstrahl entlang der Lichtschnittlinie bewegt wird, mindestens 30mal größer, vorzugsweise 50mal größer als die Profilvorschubgeschwindigkeit ist.

10. Verfahren nach einem der Ansprüche 1 bis 9, dadurch gekennzeichnet, daß jede auf oder in der Kamera abgebildete Spur als Zeile kontinuierlich oder diskontinuierlich ausgelesen wird, so daß während eines Lesevorganges einer Spur bereits eine zweite und/oder dritte Spur abgebildet und/oder gespeichert werden kann.

11. Verfahren nach einem der Ansprüche 1 bis 10, dadurch gekennzeichnet, daß der Laserstrahl so hell-dunkel getastet wird, daß ein Lichtgitter entsteht.

12. Verfahren nach Anspruch 11, dadurch gekennzeichnet, daß das Lichtgitter mittels eines Subpixel-Algorithmus vermessen wird.

13. Verfahren nach einem der Ansprüche 1 bis 12, dadurch gekennzeichnet, daß das Verhältnis Breite/Höhe des angestrahlten Objektfeldes auf dem bewegten Profil dem Breite/Höhe-Verhältnis der CCD-Matrix-Kamera angepaßt ist.

14. Verfahren nach einem der Ansprüche 1 bis 13, dadurch gekennzeichnet, daß das Breite/Höhe-Verhältnis des Objektfeldes größer als 10 : 1 ist und die CCD-Kamera 2048 x 96 Bildpunkte aufweist.

15. Verfahren nach einem der Ansprüche 1 bis 14, gekennzeichnet durch eine Auflösung in horizontaler Richtung von 0,25 mm und in dazu senkrechter Richtung von 0,1 mm.

16. Vorrichtung zur Durchführung des Verfahrens nach einem der Ansprüche 1 bis mit einem Lichtschnitt-Triangulations-Aufbau, bei dem ein über eine Scanner-Linse (13) erzeugtes Laserstrahlenbündel (16) mittels einer CCD-Kamera (15) aufgenommen wird, dadurch gekennzeichnet, daß das Laserstrahlenbündel über einen schwenkbaren Spiegel (12) auf die Scanner-Linse (13) so lenkbar ist, daß die sukzessive erzeugten Laserlichtpunkte auf einer quer zum Profil (20) verlaufenden Lichtschnittlinie liegen.

17. Vorrichtung nach Anspruch 16, dadurch gekennzeichnet, daß die CCD-Kamera (15) eine Matrixkamera ist, deren Matrix ein Breiten-Höhen-Verhältnis von 10 : 1 oder mehr aufweist, wobei die Lichtschnittebenenbreite auf dem Objekt >500 mm bei einem Breiten/Höhen-Verhältnis von mehr als 10 : 1 ist.

18. Vorrichtung nach Anspruch 17, dadurch gekennzeichnet, daß die CCD-Kamera (15) 2048 x 96 Bildpunkte aufweist.

19. Vorrichtung nach einem der Ansprüche 15 bis 18, dadurch gekennzeichnet, daß die Abmessungen der CCD-Kamera (15) dem Verhältnis Breite zu Höhe des zu vermessenden Profiles (20) entsprechen.
